# EUROPEAN PATENT APPLICATION

(11) **EP 4 617 156 A1**
(43) Date of publication of application: **17.09.2025**
(21) Application number: 23888553.7
(22) Date of filing: 30.10.2023
(51) Int. Cl.: B62D 57/02, B25J 5/00, B60B 19/00, B62D 61/12, B65G 1/04, B65G 1/137, B65G 67/02

(54) **CART ROBOT**

(30) Priority: 09.11.2022 JP 2022179342; 21.12.2022 JP 2022204596; 23.12.2022 JP 2022206479
(71) Applicant: SoftBank Group Corp., Tokyo 105-7537 (JP)
(72) Inventor: SON, Masayoshi, Tokyo 105-7537 (JP)
(74) Representative: SSM Sandmair
(86) International application number: PCT/JP2023/039125
(87) International publication number: WO 2024/101205

(57) **Abstract**

A cart robot according to an embodiment includes a travel cart body; a first axle that is arranged on the travel cart body; multiple second axles that extend in a diameter direction of the first axle from a distal end portion of the first axle, and that can extend and retract in the diameter direction; a wheel that is arranged at a distal end portion of the respective second axles; a first driving unit that rotates the second axles in a circumference direction of the first axle; a second driving unit that rotates the wheel with respect to the second axle; a third driving unit that extends and retracts the second axle in the diameter direction; a first lock unit that can restrict rotation of the second axle in the circumference direction; a second lock unit that can restrict rotation of the wheel; and a control device that controls extension and retraction of the second axle, restriction by the first lock unit, and restriction by the second lock unit.

## Description

### Field

The disclosed embodiments relate to a cart robot.

### Background

Conventionally, a cart robot that autonomously navigates based on a predetermined picking plan of items, and that retrieves items from shelves using an arm has been known (for example, Patent Literature 1).

### Citation List

### Patent Literature

Patent Literature 1: JP-A-2022-68557

### Summary

### Technical Problem

However, the conventional cart robot is not designed to navigate stairs, and there is room for improvement.

The present invention has been achieved in view of the above problem, and its object is to provide a cart robot capable of navigating stairs.

### Solution to Problem

A cart robot according to an embodiment includes a travel cart body; a first axle that is arranged on the travel cart body; multiple second axles that extend in a diameter direction of the first axle from a distal end portion of the first axle, and that can extend and retract in the diameter direction; a wheel that is arranged at a distal end portion of the respective second axles; a first driving unit that rotates the second axles in a circumference direction of the first axle; a second driving unit that rotates the wheel with respect to the second axle; a third driving unit that extends and retracts the second axle in the diameter direction; a first lock unit that can restrict rotation of the second axle in the circumference direction; a second lock unit that can restrict rotation of the wheel; and a control device that controls extension and retraction of the second axle, restriction by the first lock unit, and restriction by the second lock unit.

A cart robot according to an embodiment includes a travel cart body; a first axle that is arranged on the travel cart body; a plurality of second axles that extend in a diameter direction of the first axle from a distal end portion of the first axle; a wheel that is arranged at a distal end portion of the respective second axles; a first driving unit that rotates the second axles in a circumference direction of the first axle; a second driving unit that rotates the wheel with respect to the second axle; and a control device that controls the first driving unit and the second driving unit, wherein the control device changes number of the wheels to be in contact with a route surface according to weight of a load loaded on the travel cart body.

### Advantageous Effects of Invention

According to one aspect of the embodiments, navigation of stairs is enabled.

### Brief Description of Drawings

FIG. 1 is a side view illustrating an overview of a cart robot according to a first embodiment.
FIG. 2 is a control block diagram of an information processing device according to the first embodiment.
FIG. 3 is a diagram illustrating a state in which the cart robot is navigating a flat travel route.
FIG. 4 is a diagram illustrating a state in which the cart robot navigate stairs.
FIG. 5 is a flowchart explaining a switching process of a travel state of the cart robot according to a first embodiment.
FIG. 6 is a diagram schematically illustrating an example of a computer hardware configuration that functions as the information processing device.
FIG. 7 is a side view illustrating an overview of a cart robot according to a second embodiment.
FIG. 8 is a diagram illustrating the cart robot when weight of a load loaded on a traveling body is less than predetermined weight.
FIG. 9 is a flowchart explaining a switching process of a travel state of the cart robot according to a second embodiment.
FIG. 10 is a diagram illustrating a state in which a cart robot according to a modification is navigating a flat route surface.
FIG. 11 is a control block diagram of an information processing device according to a third embodiment.
FIG. 12 is a diagram illustrating a drive stopping configuration of a wheel that is not in contact with a route surface of the cart robot according to the third embodiment.
FIG. 13 is a flowchart explaining processing of a drive stopping control of a wheel that is not in contact with the route surface in the cart robot according to the third embodiment.
FIG. 14 is a diagram illustrating a drive stopping configuration of a wheel that is not in contact with a route surface of the cart robot according to a fourth embodiment.
FIG. 15 is a flowchart explaining processing of a drive stopping control of a wheel that is not in contact with the route surface in the cart robot according to the fourth embodiment.

### Description of Embodiments

Hereinafter, the present invention will be explained through embodiments, but the following embodiments are not intended to limit the invention within the scope of the claims. Moreover, not all combinations of features explained in the embodiments are necessarily essential for the solution of the invention.

### First Embodiment

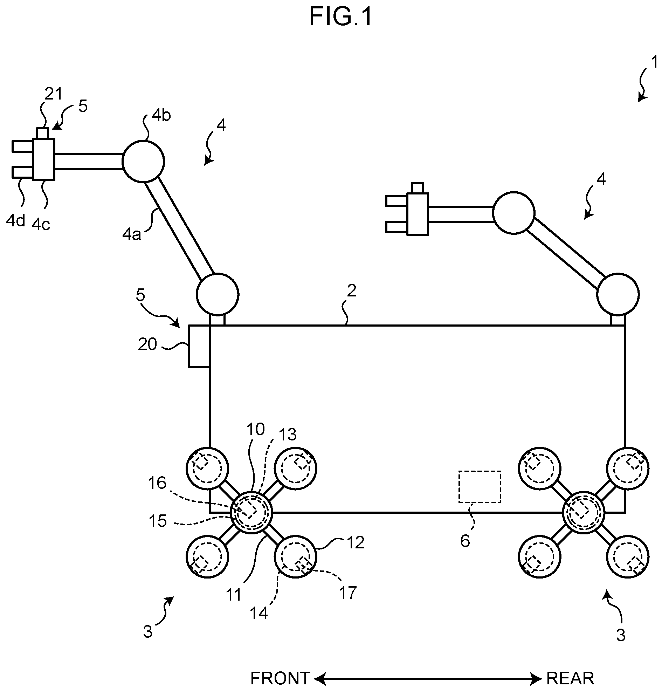

A cart robot 1 according to a first embodiment will be explained referring to FIG. 1. FIG. 1 is a side view illustrating an overview of the cart robot 1 according to the first embodiment.

The cart robot 1 conveys a load. The cart robot 1 conveys a load loaded thereon. The cart robot 1 travels along a designated travel route. The travel route is changeable.

The cart robot 1 retrieves a load in a warehouse and conveys it. The cart robot 1 is not limited to use in warehouses. The cart robot 1 may be used in a building, such as an office building. The load includes items. documents, and the like. In the following, the cart robot 1 having an arm 4 will be explained as an example, but it is not limited thereto. The cart robot 1 may be one not equipped with the arm 4.

The cart robot 1 includes a travel cart body 2, a drive mechanism 3, an arm 4, a detecting unit 5, and an information processing device 6. The travel cart body 2 is formed into a box shape with an open top. The travel cart body 2 is capable of carrying a load.

The drive mechanism 3 is arranged in the travel cart body 2. The drive mechanism 3 includes a first axle 10, a second axle 11, a wheel 12, a first driving unit 13, a second driving unit 14, a third driving unit 15, a first lock unit 16, and a second lock unit 17.

The first axle 10 is arranged in the travel cart body 2. The first axle 10 is rotatably supported by the travel cart body 2. The first axles 10 are provided in plurality. That is, the drive mechanisms 3 are provided in plurality. The first axles 10 is provided in an even number on the travel cart body 2. For example, four units of the first axle 10 are provided on the travel cart body 2. The number of the first axle 10 is not limited to four. The number of the first axle 10 may be two, or six. The first axle 10 is configured to extend in a left-right direction of the travel cart body 2. When the number of the first axle 10 is two, the two first axle 10 are arranged be aligned in a front-rear direction.

The second axle 11 is configured to extend in a diameter direction of the first axle 10 from a distal end portion of the first axle 10. The second axle 11 is extendable in the diameter direction of the first axle 10. The second axles 11 are provided in plurality to the first axle 10. The multiple second axles 11 are extendable in the diameter direction of the first axle 10. For example, four units of the second axle 11 are provided on a single unit of the first axle 10. The second axles 11 are arranged at equal intervals along the circumference direction of the first axle 10. When the first axle 10 is rotated, the second axles 11 are rotated integrally with the first axle 10. The number of second axle 11 is not limited to four. The number of the second axle 11 is three or more.

The wheel 12 is arranged at a distal end portion of the second axle 11. The wheel 12 is provided to each of the second axles 11. That is, the wheels 12 are provided in plurality for a single unit of the first axle 10. For example, four units of the wheels 12 are provided on a single unit of the first axle 10. The wheel 12 is arranged to be rotatable with respect to the second axle 11. The wheel 12 is rotatably supported by the second axle 11.

The first driving unit 13 rotates the second axles 11 in the circumference direction of the first axle 10. The first driving unit 13 rotates the first axle 10 to rotate the second axle 11 in the circumference direction of the first axle 10. The first driving unit 13 is provided on each of the first axles 10. That is, the first driving units 13 are provided in plurality. For example, four units of the first driving unit 13 are provided. The first driving unit 13 is a motor.

The second driving unit 14 rotates the wheel 12. The second driving unit 14 is arranged in each of the wheels 12. For example, four units of the second driving unit 14 are provided on a single unit of the first axle 10. The second driving unit 14 is a motor.

The third driving unit 15 extends and retracts the second axle 11 in the diameter direction of the first axle 10. The third driving unit 15 is provided, for example, one each for a single unit of the first axle 10. The third driving unit 15 extends and retracts the second axle 11 arranged in the first axle 10 in the diameter direction of the first axle 10. The third driving unit 15 may be provided on each of the second axles 11. The second axle 11 may be able to change the length in the diameter direction of the first axle 10. The third driving unit 15 includes the motor and the conversion mechanism that converts the rotational motion by the motor (rotational motion) into a linear motion.

The first lock unit 16 is configured to be able to restrict the rotation of the second axle 11 in the circumference direction of the first axle 10. The first lock unit 16 switches rotation states of the second axle 11 in the circumference direction of the first axle 10. The rotation states include a non-lock state in which rotation is allowed, and a lock state in which rotation is restricted, specifically, prohibits.

That is, the first lock unit 16 can prohibit rotation of the second axle 11 in the circumference direction of the first axle 10. When the first lock unit 16 is in the lock state, the first axle 10 is fixed so that the first axle 10 does not rotate relative to the travel cart body 2. Thus, rotation of the second axle 11 in the circumference direction of the first axle 10 is prohibited.

When the first lock unit 16 is in the non-lock state, the first axle 10 is released from fixation. Thus, the first axle 10 becomes rotatable relative to the travel cart body 2, and rotation of the second axle 11 in the circumference direction of the first axle 10 is allowed.

The first lock unit 16 is arranged in each of the first axles 10. The first lock unit 16 includes, for example, an engaging member that engages with the first axle 10 to restrict rotation of the first axle 10, and an actuator that operates the engaging member. The actuator includes, for example, a motor and the like.

The second lock unit 17 is configured to be able to regulate rotation of the wheel 12. The second lock unit 17 switches the rotational state of the wheel 12. The second lock unit 17 can prohibit the rotation of the wheel 12. If the second lock unit 17 is in the lock state, the wheel 12 is fixed to the second axle 11 so that the wheel 12 does not rotate. Thus, rotation of the wheel 12 relative to the second axle 11 is prohibited.

When the second lock unit 17 is in the non-lock state, the wheel 12 is released from fixation to the second axle 11. Thus, rotation of the wheel 12 relative to the second axle 11 is allowed.

The second lock unit 17 is provided to each of the wheels 12, that is, each of the second axle 11. The second lock unit 17 includes, for example, a connecting member that connects the second axle 11 and the wheel 12 to prohibit rotation of the wheel 12 relative to the second axle 11, and an actuator that operates the connecting member.

The arm 4 is attached to the travel cart body 2. A proximal end portion of the arm 4 is attached to the travel cart body 2, and the arm 4 is thereby fixed to the travel cart body 2. For example, the proximal end portion of the arm 4 is attached to an upper end of the travel cart body 2. The arms 4 are provided on the travel cart body 2 in plurality. For example, two units of the arm 4 are provided. The number of the arm 4 is not limited to this. The number of the arms 4 to be provided may be one, or three or more.

The arm 4 is attached to a front end and a rear end of the travel cart body 2. The arm 4 is attached to a portion near the center in the left-right direction of the travel cart body 2.

The arm 4 has multiple rod portions 4a and multiple joint portions 4b. For example, the joint portion 4b is arranged between the two rod portions 4a, making the two rods 4a rotatable relative to each other. Each of the joint portions 4b has a motor. As the rod portions 4a rotate relative to each other through each of the joint portions 4b, the arm 4 can be extended and retracted, and can rotate 360 degrees.

At a distal end portion of the arm 4, a gripping portion 4c is arranged. For example, the gripping portion 4c includes multiple finger portions 4d. The number of finger portions 4d for the gripping portion 4c is three or five. The number of the finger portions 4d for the gripping portion 4c is not limited thereto. The number of the finger portions 4d for the gripping portion 4c is two or more. The arm 4 grips a load by moving the fingers 4d. The gripping portion 4c may grip a load by suction.

The detecting unit 5 includes a first detecting unit 20 and a second detecting unit 21. The first detecting unit 20 is attached to the travel cart body 2. The first detecting unit 20 is attached to, for example, the front end of the travel cart body 2. The first detecting unit 20 detects a shape of a travel route R (R1, R2) in a traveling direction of the travel cart body 2. The travel route R includes a flat travel route R1, and an even travel route R2, such as stairs. The shape of the travel route R includes height of the stairs, depth of the stairs, and angle of the stairs.

The first detecting unit 20 is a camera. The camera includes an imaging device, such as a charge coupled device (CCD) or a complementary metal oxide semiconductor (CMOS), and a lens. The first detecting unit 20 may include at least one of a solid state light detection and ranging (LiDAR), a multi-color laser coaxial displacement gauge, or various other sensors. The first detecting unit 20 may include a MoPU. MoPU is a unit that detects movement by a high resolution camera. MoPU outputs motion information indicating captured movement of an object from an image of the object captured at a frame rate of 1,000 frames per second or higher, for example, at a frame rate of 1000 frames per second or higher. Furthermore, the vector information of movement along a predetermined coordinate axis of a point indicating a location of the object is output as motion information. That is, the motion information output from the MoPU does not include information necessary to identify what the captured object is (for example, whether it is a person or an obstacle), and only includes information that indicates movement (moving direction and moving speed) of a center point (or center of gravity) of the object on coordinate axes (x axis, y axis, z axis).

The second detecting unit 21 detects movement on a distal end side of the arm 4. The second detecting unit 21 is attached, for example, to the arm 4. For example, the second detecting unit 21 is attached to the distal end portion of the arm 4.

The second detecting unit 21 is a camera. The second detecting unit 21 may include at least one of a solid state LiDAR, a multi-color laser coaxial displacement gauge, or other various sensors. The second detecting unit 21 may include an MoPU.

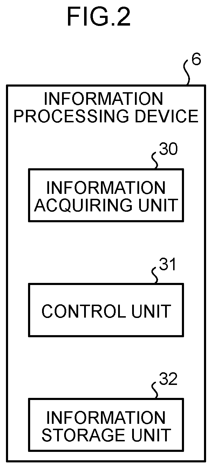

As illustrated in FIG. 2, the information processing device 6 includes an information acquiring unit 30, a control unit 31, and an information storage unit 32. FIG. 2 is a control block diagram of the information processing device 6 according to the first embodiment.

The information acquiring unit 30 acquires information detected by the first detecting unit 20 and the second detecting unit 21. The information acquiring unit 30 acquires a signal transmitted from a control center that instructs an operation of the cart robot 1, and the like. The signal transmitted from the control center and the like includes information relating to the travel route of the cart robot 1, and the like.

The control unit 31 controls operation of the arm 4 and the travel cart body 2, based on a signal transmitted from a control center or the like and acquired by the information acquiring unit 30. Moreover, the control unit 31 controls operation of the arm 4 and the travel cart body 2 based on a detection result by the first detecting unit 20 and the second detecting unit 21. The control unit 31 controls operation of the travel cart body 2 by controlling each of the driving units 13 to 15 of the driving mechanism 3 and each of the lock units 16 and 17.

The control unit 31 determines whether the travel route R on which the cart robot 1 travels is the flat travel route R1 or the uneven route surface, such as, stairs (hereinafter, the reference symbol R2 is assigned). The control unit 31 uses a detection result of the first detecting unit 20 and, for example, artificial intelligence (AI) to determine whether the travel route R on which the cart robot 1 travels is the flat travel route R1 or an uneven route surface such as stairs R2.

The control unit 31 controls restriction by the first lock unit 16. The control unit 31 switches the rotational state of the second axle 11 to the circumferential direction of the first axle 10. The control unit 31 switches between the lock state and the non-lock state by the first lock unit 16.

The control unit 31 controls restriction by the second lock unit 17. The control unit 31 switches the rotational state of the wheel 12. The control unit 31 switches between the lock state and the non-lock state by the second lock part 17.

The control unit 31 controls a rotation speed of the first axle 10 in the first driving unit 13. The control unit 31 is capable of controlling the rotation speed of each of the first axles 10. For example, the control unit 31 can control the rotation speed of at least one first axle 10 out of the respective first axles 10 to a rotation speed different from that of the other first axles 10. The control unit 31 can control the rotation direction of each of the first axles 10.

The control unit 31 controls a rotation speed of the wheel 12 in the second driving unit 14. The control unit 31 is capable of controlling the rotation speed of each of the wheels 12. For example, the control unit 31 can control the rotation speed of at least one wheel 12 out of the respective wheels 12 to a rotation speed different from that of the other wheels 12.

The control unit 31 controls extension and retraction of the second axle 11 in the diameter direction of the first axle 10. The control unit 31 controls extension and retraction of the second axle 2 in the diameter direction of the first axle 10 by controlling the third driving unit 15. The control unit 31 can control extension and retraction of the respective second axles 11 independently. For example, the control unit 31 can control the length of at least one second axle 11 out of the respective second axles 11 to length different from that of the other second axles 11.

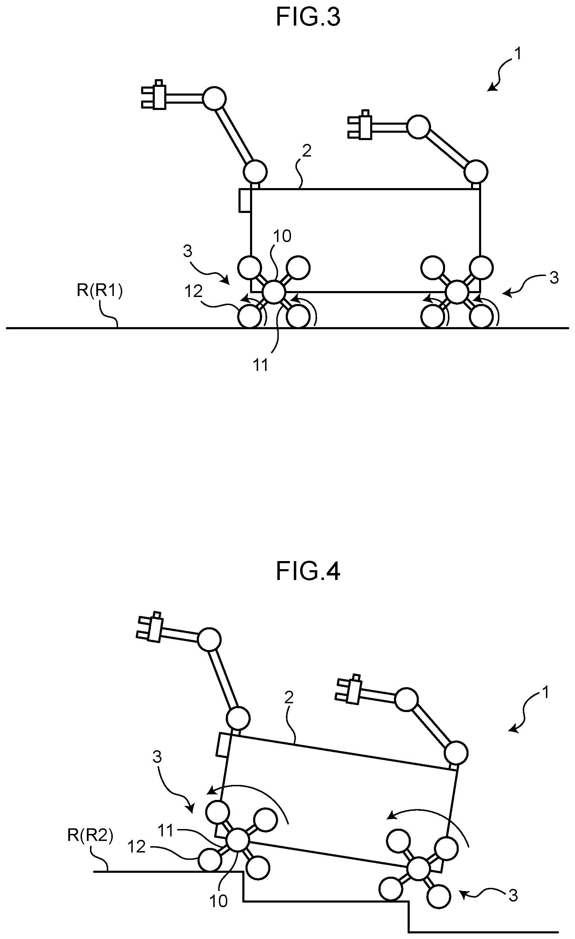

For example, the control unit 31 (refer to FIG. 2) brings the first lock unit 16 (refer to FIG. 1) into the lock state when the travel route R on which the cart robot 1 travels is the flat travel route R1, to avoid rotation of the first axle 10 as illustrated in FIG. 3. FIG. 3 is a diagram illustrating a state in which the cart robot 1 travels on the flat travel route R1. The control unit 31 adjusts a rotation position of the first axle 10 such that two wheels 12 out of the multiple wheels 12 arranged on a single unit of the first axle 10 come in contact with a route surface, and then fixes the first axle 10 not to rotate.

Moreover, the control unit 31 turns the second lock unit 17 (refer to FIG. 1) into the non-lock state when the travel route R on which the cart robot 1 travels is the flat travel route R1. The control unit 31 controls the rotation speed of the wheel 12 by the second driving unit 14, to move the cart robot 1.

For example, the control unit 31 (refer to FIG. 2) turns the second lock unit 17 (refer to FIG. 1) into the lock state when the travel route R on which the cart robot 1 travels is the stairs R2, to prevent the wheel 12 from rotating relative to the second axle 11 as illustrated in FIG. 4. FIG. 4 is a diagram illustrating a state in which the cart robot 1 navigates the stairs R2.

Furthermore, the control unit 31 turns the first lock unit 16 (refer to FIG. 1) into the non-lock state when the travel route R on which the cart robot 1 travels is the stairs R2. The control unit 31 controls the rotation speed of the first axle 10 by the first driving unit 13, to make the first axle 10 the second axle 11, and the wheel 12 rotate integrally, thereby moving the cart robot 1.

When the cart robot 1 navigates the stairs R2, the wheel 12 is fixed not to rotate with respect to the second axle 11, and the second axle 11 and the wheel 12 integrally rotate, enabling the cart robot 1 to move up and down the stairs R2.

When the travel route R on which the cart robot 1 travels is the stairs R2, the control unit 31 extends and retracts the second axle 11 according to a shape of the stairs R2 (height of the stairs R2, depth of the stairs R2, angle of the stairs R2). Specifically, the control unit 31 adjusts the length of the second axle 11 according to the shape of the stairs R2. Thus, the cart robot 1 can stabilize the traveling posture. Moreover, the cart robot 1 can move up and down the stairs R2 of various shapes.

The control unit 31 controls operation of the arm 4 according to a detection result of the second detecting unit 21, to hand over a load. Handing over a load includes retrieving a load.

The cart robot 1 may be movable between different floors by an elevator by controlling the operation of the arm 4 by the control unit 31. The control unit 31 controls the arm 4 based on a detection result of the second detecting unit 21, and presses a button of a destination floor of an elevator. Thus, the cart robot 1 can move between floors without using the stairs R2 in a building equipped with an elevator.

The information storage unit 32 is implemented by a storage medium such as a semiconductor memory device including a random access memory (RAM), a flash memory, and the like. The information storage unit 32 stores various kinds of programs executed by the control unit 31. The information storage unit 32 stores information acquired by the information acquiring unit 30.

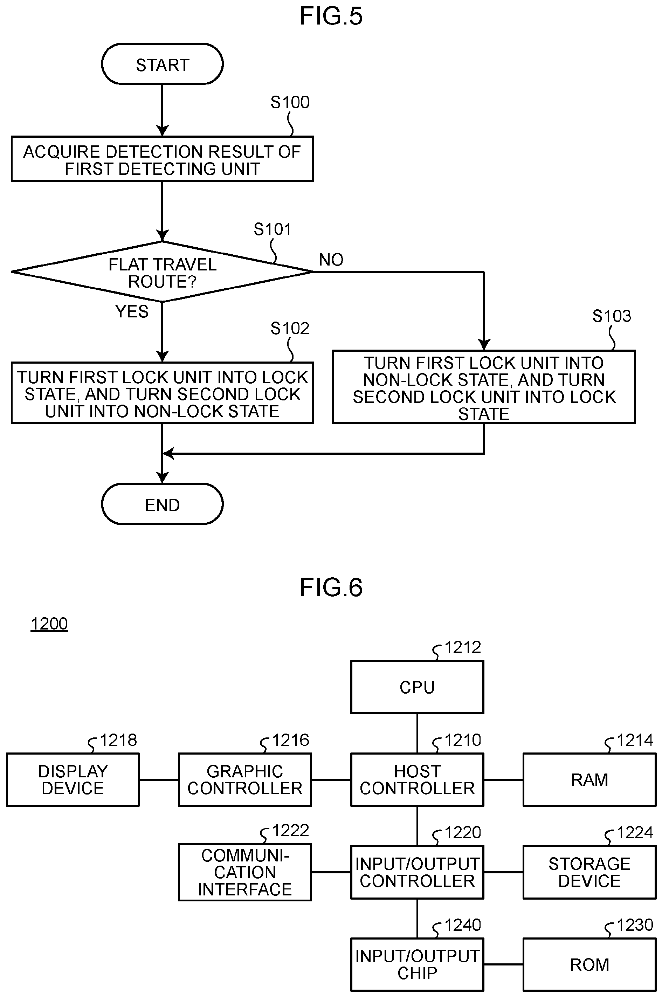

Next, switching process of a travel state of the cart robot 1 according to a first embodiment will be explained using a flowchart in FIG. 5. FIG. 5 is a flowchart explaining the switching process of a travel state of the cart robot 1 according to the first embodiment.

The information processing device 6 acquires a detection result by the first detecting unit 20 (S100). The information processing device determines whether the travel route R1 on which the cart robot 1 travels is the flat travel route R1 based on the acquired detection result (S101).

When the travel route R1 on which the cart robot 1 travels is the flat travel route R1 (S101: YES), the information processing device 6 turns the first lock unit 16 into the lock state, and turns the second lock unit 17 into the non-lock state (S102).

When the travel route R1 on which the cart robot 1 travels is not the flat travel route R1 (that is, when it is the stairs R2) (S101: NO), for example, when the travel route R on which the cart robot 1 travels is the stairs R2, the information processing device 6 turns the first lock unit 16 into the non-lock state, and turns the second lock unit 17 into the lock state (S103).

The cart robot 1 includes the travel cart body 2, the first axle 10, the multiple second axles 11, the wheel 12, the first driving unit 13, the second driving unit 14, the third driving unit 15, the first lock unit 16, the second lock unit 17, and the information processing device 6. The first axle 10 is mounted on the travel cart body 2. The second axles extend from the distal end portion of the first axle 10 in the diameter direction of the first axle 10, and are extendable in the diameter direction. The wheel 12 is arranged at each of the distal end portion of the multiple second axles 11. The first driving unit 13 rotates the multiple second axles 11 in the circumference direction of the first axle 10. The second driving unit 14 rotates the wheel 12 relative to the second axle 11. The third driving unit 15 extends the second axle 11 in the diameter direction of the first axle 10. The first lock unit 16 is capable of restricting the rotation of the second axle 11 in the circumference direction of the first axle 10. The second lock unit 17 is capable of restricting the rotation of the wheel 12. The information processing device 6 controls the extension and the retraction of the second axle 11, the restriction by the first lock unit 16, and the restriction by the second lock unit 17.

Thus, the cart robot 1 can travel up and down the stairs even when the travel route R on which the cart robot 1 travels is the stairs R2. For example, as the first lock unit 16 becomes the non-lock state and the second lock unit 17 becomes the lock state, the cart robot 1 can travels up and down the stairs R2.

Moreover, because the second axle 11 extends and retracts, the cart robot 1 can navigate the stairs steadily. Furthermore, because the second axle 11 extends and retracts according to the shape of the stairs R2, the cart robot 1 can travel up and down the stairs R2 adapting to various kinds of the stairs R2.

The cart robot 1 includes the first detecting unit 20. The first detecting unit 20 detects the shape of the travel route R in a traveling direction of the travel cart body 2. The information processing device 6 controls the extension of the second axle 11, the restriction by the first lock unit 16, and the restriction by the second lock unit 17 according to the shape of the travel route R detected by the first detecting unit 20.

Thus, the cart robot 1 can travel up and down the stairs R2 preferably, adapting to various kinds of the stairs R2.

The cart robot 1 includes the arm 4 and the second detecting unit 21. The arm 4 is mounted on the travel cart body 2. The second detecting unit 21 detects movement of the arm 4 on the distal end side. The information processing device 6 controls the arm 4 based on the detection result of the second detecting unit 21.

Thus, the cart robot 1 can push, for example, a button of a destination floor of an elevator according to the detection result of the second detecting unit 21. Therefore, the cart robot 1 can move between floors without using the stairs R2 in a building equipped with an elevator.

The travel cart body 2 of the cart robot 1 may be configured such that a part of the travel cart body 2 is slidable in a traveling direction (front-rear direction). For example, the travel cart body 2 includes a fixed portion and a movable portion. To the fixed portion, the first axle 10 is attached. The movable portion is slidable in the front-rear direction with respect to the fixed portion. The movable portion is, for example, a tray on which a load is placed. A part of the first axle 10 may be attached to movable portion.

Thus, the movable portion slides with respect to the fixed portion, for example, according to the size (weight) of the load, and thereby stabilizing the balance of the cart robot 1.

FIG. 6 is a diagram schematically illustrating an example of a hardware configuration of a computer 1200 that functions as the information processing device 6. A program installed in the computer 1200 can cause the computer 1200 to function as one or more "units" of a device according to the present embodiment, and/or can cause the computer 1200 to execute a process or a step of the process according to the present embodiment. Such a program may be executed by a central processing unit (CPU) 1212 to cause the computer 1200 to perform a specific operation associated with a flowchart and some or all of blocks in a block diagram described in the present specification.

The computer 1200 according to the present embodiment includes the CPU 1212, a RAM 1214, and a graphic controller 1216, those components are connected to one another through a host controller 1210. The computer 1200 also includes a communication interface 1222, a storage device 1224, a digital versatile disk (DVD) drive, and an input/output unit such as an integrated circuit (IC) card drive, and those components are connected to one another through the host controller 1210. The DVD drive may be a DVD-read only memory (ROM) drive, a DVD-RAM drive, or the like. The storage device 1224 may be a hard disk drive, a solid state drive, or the like. The computer 1200 also includes a ROM 1230 and an input/output unit such as a keyboard, and those components are connected to an input/output controller 1220 through an input/output chip 1240.

The CPU 1212 operates according to a program stored in the ROM 1230 and the RAM 1214, and thereby controls the respective units. The graphic controller 1216 acquires image data generated by the CPU 1212 in a frame buffer provided within the RAM 1214 or the like, or in itself, so that the image data is displayed on a display device 1218.

The communication interface 1222 communicates with another electronic device through a network. The storage device 1224 stores a program and data used by the CPU 1212 in the computer 1200. The DVD drive reads a program or data from a DVD-ROM or the like and provides it to the storage device 1224. The IC card drive reads a program and data from an IC card, and/or writes a program and data in an IC card.

The ROM 1230 stores therein a boot program and the like executed by the computer 1200 at the time of activation, and/or a program dependent on hardware of the computer 1200. The input/output chip 1240 may also connect various input/output units to the input/output controller 1220 via a USB port, a parallel port, a serial port, a keyboard port, a mouse port, and the like.

The program is provided by a computer-readable storage medium, such as a DVD-ROM or an IC card. The program is read from the computer-readable storage medium, installed in the storage device 1224, the RAM 1214, or the ROM 1230, which is also an example of the computer-readable storage medium, and is executed by the CPU 1212. The information processing described in these programs is read by the computer 1200, enables coordination between the program and various types of hardware resources described above. An device or a method may be configured by implementing operation or processing of information through the use of the computer 1200.

For example, when communication is performed between the computer 1200 and an external device, the CPU 1212 may execute a communication program loaded onto the RAM 1214, and may instruct the communication interface 1222 to perform communication processing based on processing described in the communication program. The communication interface 1222 reads transmission data stored in a transmission buffer area provided within the RAM 1214, the storage device 1224, the DVD-ROM, or a recording medium such as an IC card, transmits the read transmission data to a network, or writes reception data received from a network in a reception buffer aera provided in a recording medium, or the like under the control of the CPU 1212.

Moreover, the CPU 1212 may cause all or necessary part of a file or database stored in the storage device 1224, the DVD drive (DVD-ROM), or an external recording medium such as an IC card, to be read into the RAM 1214, and may execute various types of processing with respect to the data in the RAM 1214. The CPU 1212 may then write back the processed data to the external recording medium.

Various types of information, such as program, data, table, and database, may be stored in a recording medium and subjected to information processing. The CPU 1212 may perform, with respect to the data read from the RAM 1214, various types of processing, such as various types of operation, information processing, conditional judgment, conditional branching, unconditional branching, and information search/replacement, described throughout the present disclosure, and specified by an instruction sequence of the program, and may write back the result to the RAM 1214. Moreover, the CPU 1212 may search for information in a file in a recording medium, a database, and the like. For example, when multiple entries respectively having an attribute value of a first attribute associated with an attribute value of a second attribute are stored in a recording medium, the CPU 1212 may search for an entry that matches a condition specified for the attribute value of the first attribute from among the multiple entries, read the attribute of the second attribute stored in the entry, and acquire the attribute of the second attribute associated with the first attribute that satisfies a predetermined condition.

The program or software module described above may be stored in a computer-readable storage medium on or near the computer 1200. Furthermore, a recording medium, such as a hard disk and a RAM, provided in a server system connected to a dedicated communication network or the Internet can be used as a computer-readable storage medium, thereby enabling the program to be provided to the computer 1200 via the network.

A block in a flowchart and a block diagram in the present embodiment may represent a step of a process in which an operation is executed, or a "unit" of a device that performs the operation. A specific step and a "unit" may be implemented by a dedicated circuit, a programmable circuit provided with a computer-readable instruction stored on a computer-readable storage medium, and/or a processor provided with a computer-readable instruction stored on a computer-readable storage medium. The dedicated circuit may include a digital and/or an analog hardware circuit, and may include an integrated circuit (IC) and/or a discrete circuit. The programmable circuit may include a reconfigurable hardware circuit, such as a field-programmable gate array (FPGA) and a programmable logic array (PLA), including AND, OR, XOR, NAND, NOR, and other logic operations, flip-flop, register, and memory element.

The computer-readable storage medium may include any tangible device capable of storing an instruction executed by an appropriate device. As a result, the computer-readable storage medium having such an instruction stored therein is to constitute a product that includes an instruction executed to form a means to perform an operation specified in a flowchart or a block diagram. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a RAM**,** a ROM, an erasable programmable ROM (EPROM or flash memory), an electrically erasable programmable ROM (EEPROM), a static RAM (SRAM), a compact disk ROM (CD-ROM), a DVD, a Blu-ray (registered trademark) disk, a memory stick, and an IC card.

The computer-readable instruction may include an assembler instruction, an instruction set architecture (ISA) instruction, a machine instruction, a machine-dependent instruction, a microcode, a firmware instruction, state-setting data, or a source code or an object code written in one or an arbitrary combination of multiple programming languages including an object-oriented programming language, such as Smalltalk (registered trademark), JAVA (registered trademark), and C++, and a traditional procedural programming language, such as the C programming language or a similar programming language.

The computer-readable instruction may be provided to a processor or a programmable circuit of a general-purpose computer, a special-purpose computer, or other programmable data processing device locally, through a local area network (LAN), or a wide area network (WAN) such as the Internet, to execute the computer-readable instruction for the purpose of generating a means to perform an operation specified by a flowchart or a block diagram by the processor or the programmable circuit of the general-purpose computer, the special-purpose computer, or the other programmable data processing device. Examples of the processor include a computer processor, a processing unit, a microprocessor, a digital signal processor, a controller, a microcontroller, and the like.

### Second Embodiment

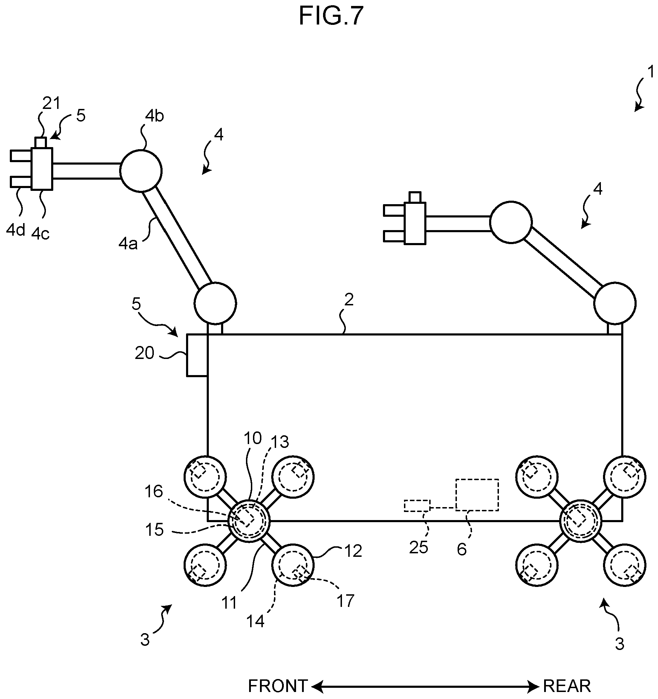

The cart robot 1 according to a second embodiment will be explained referring to FIG. 7. FIG. 7 is a side view illustrating an overview of the cart robot 1 according to the second embodiment. Explanation of same components as the first embodiment and the like will be omitted.

A signal transmitted by the information acquiring unit 30 (refer to FIG. 2) of the second embodiment may include information relating to a load.

The information acquiring unit 30 acquires information relating to weight of a load measured by a weight sensor 25 (refer to FIG. 7). The weight sensor 25 is arranged on the travel cart body 2. The weight sensor 25 measures weight of a load to be loaded on the travel cart body 2. The weight of the load loaded on the travel cart body 2 is total weight of the load loaded on the travel cart body 2. For example, when the number of loads loaded on the travel cart body 2 is two, the weight of the load on the travel cart body 2 is the sum of weights of the two loads.

The control unit 31 controls operation of the travel cart body 2 similarly to the first embodiment. The control unit 31 controls the drive mechanism 3 based on a measurement result of the weight sensor 25.

The control unit 31 fixes the first axle 10 to avoid its rotation, after adjusting a rotation position of the first axle 10. For example, the control unit 31 detects a rotation angle of the first axle 10 by a rotation angle sensor, and adjusts the rotation position of the first axle 10.

The control unit 31 changes the number of the wheels 12 to be in contact with the route surface according to weight of a load loaded on the travel cart body 2 when the travel route R on which the cart robot 1 travels is the flat travel route R1.

The weight sensor 25 may be arranged on the arm 4. In this case, the control unit 31 calculates the weight of the loads loaded on the travel cart body 2 by adding the measured weights of the loads.

Moreover, the weight of the load loaded on the travel cart body 2 may also be the total of registered weights for each load. That is, the weight of loads loaded on the travel cart body 2 may be the total of weights registered for each load received by the cart robot 1. In this case, the weight of each load is associated with information of each load as the information of each load. The control unit 31 reads, for example, when the cart robot 1 receives a load, the information relating to the weight of the load from the information of each load. The control unit 31 calculates the weight of the loads loaded on the travel cart body 2.

Furthermore, the control unit 31 may change the number of the wheels 12 to be in contact with the route surface according to the weight of loads expected to be loaded on the travel cart body 2. That is, the weight of the loads loaded on the travel cart body 2 includes weight of loads expected to be loaded on the travel cart body 2. In this case, the number of wheels 12 to be in contact with the route surface is preset according to the weight of the loads expected to be loaded on the travel cart body 2.

The control unit 31 increases the number of the wheels 12 to be in contact with the route surface when the weight of the loads loaded on the travel cart body 2 is heavy. The control unit 31 increases the number of the wheels 12 to be in contact with the route surface when the weight of the loads loaded on the travel cart body 2 is equal to or more than a predetermined weight compared to when the weight of the loads loaded on the travel cart body 2 is less than the predetermined weight.

The predetermined weight is a preset weight. The predetermined weight is a threshold to change the number of the wheels 12 to be in contact with the route surface.

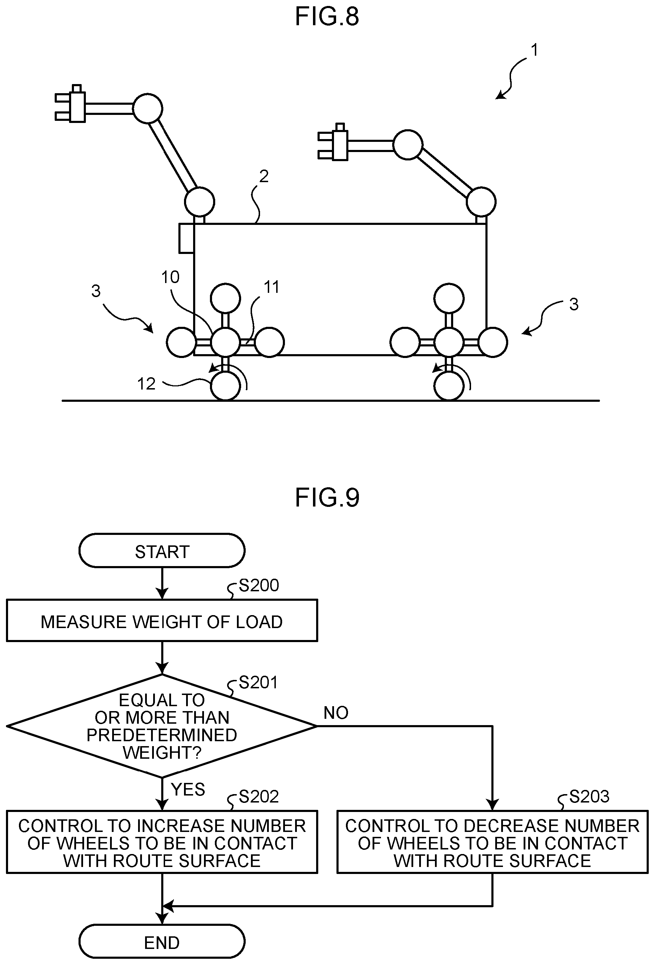

The control unit 31 controls the respective drive mechanisms 3, for example, such that the number of the wheels 12 to be in contact with the route surface is to be one in the respective drive mechanisms 3 as illustrated in FIG. 8 when the weight of the load loaded on the travel cart body 2 is less than the predetermined weight. FIG. 8 is a diagram illustrating the cart robot 1 when the weight of the loads loaded on the travel cart body 2 is less than the predetermined weight. In this case, the cart robot 1 travels in a state in which four wheels 12 are in contact with the route surface. The control unit 31 changes the number of the wheels 12 to be in contact with the route surface by controlling the first driving unit 13 and the second driving unit 14.

The control unit 31 controls the respective drive mechanisms 3, for example, such that the number of the wheels 12 to be in contact with the route surface is to be two in the respective drive mechanisms 3 as illustrated in FIG. 3 when the weight of the load loaded on the travel cart body 2 is equal to or more than the predetermined weight. FIG. 8 is a diagram illustrating the cart robot 1 when the weight of the loads loaded on the travel cart body 2 is less than the predetermined weight. In this case, the cart robot 1 travels in a state in which eight wheels 12 are in contact with the route surface. The control unit 31 changes the number of the wheels 12 to be in contact with the route surface by controlling the first driving unit 13 and the second driving unit 14.

The control unit 31 performs measurement of the weight of the load at a predetermined measurement timing. The predetermined timing is a preset timing. For example, the predetermined timing is every several minutes. The predetermined measurement timing may be every several tens of seconds, or the like.

When the weight of the load fluctuates around the predetermined weight, the control unit 31 can prevent the number of the wheels to be in contact with the route surface from being changed repeatedly, by performing measurement of the weight of the load at the predetermined measurement timing. That is, the control unit 31 changes the number of the wheels 12 to be in contact with the route surface according to the weight of the load, while executing hysteresis control. Thus, the control unit 31 can suppress the occurrence of hunting, in which the number of the wheels 12 is repeatedly changed within a short period of time.

Next, a switching process of a travel state of the cart robot 1 according to the second embodiment will be explained using a flowchart in FIG. 9. FIG. 9 is a flowchart explaining the switching process of a travel state of the cart robot 1 according to the second embodiment. The switching process is a process performed when the cart robot 1 is traveling on the flat travel route R1.

The information processing device 6 measures the weight of a load loaded on the travel cart body 2 (S200). The information processing device 6 measures the weight of the load loaded on the travel cart body 2 by the weight sensor 25.

The information processing device 6 determines whether the weight of the load loaded on the travel cart body 2 is equal to or more than the predetermined weight (S201).

When the weight of the load loaded on the travel cart body 2 is equal to or more than the predetermined weight (S201: YES), the information processing device 6 controls the respective drive mechanisms 3 such that the number of the wheels 12 to be in contact with the route surface increases (S202). For example, the information processing device 6 controls the respective drive mechanisms 3 such that two wheels 12 are in contact with the route surface in the respective drive mechanisms 3. When the respective drive mechanisms 3 have already been controlled such that two wheels 12 are in contact with the route surface in the respective drive mechanisms, processing at step S202 is skipped.

When the weight of the load loaded on the travel cart body 2 is less than the predetermined weight (S201: NO), the information processing device 6 controls the respective drive mechanisms 3 such that the number of the wheels 12 to be in contact with the route surface decreases (S203). For example, the information processing device 6 controls the respective drive mechanisms 3 such that one wheel 12 is in contact with the route surface in the respective drive mechanisms 3. When the respective drive mechanisms 3 have already been controlled such that one wheel 12 is in contact with the route surface in the respective drive mechanisms 3, processing at step S203 is skipped.

The cart robot 1 includes the travel cart body 2, the first axle 10, the multiple second axles 11, the wheels 12, and the first driving unit 13, the second driving unit 14, and the information processing device 6. The first axle 10 is arranged on the travel cart body 2. The multiple second axle 11 extend in the diameter direction of the first axle 10 from the distal end portion of the first axle 10. The wheel 12 is arranged at the distal end portion of each of the multiple second axles 11. The first driving unit 13 causes the second axles 11 to rotate in the circumference direction of the first axle 10. The second driving unit 14 rotates the wheel 12 with respect to the second axle 11. The information processing device 6 controls the first driving unit 13 and the second driving unit 14. The information processing device 6 changes the number of the wheels 12 to be in contact with the route surface according to the weight of a load loaded on the travel cart body **2.**

Thus, the cart robot 1 travels in a state in which the wheel 12 that is changed according to the weight of the load loaded on the travel cart body 2 are in contact with the route surface. Therefore, the cart robot 1 can travel with the suitable number of the wheels 12 for the weight of the load loaded on the travel cart body 2, and can improve the traveling performance.

The information processing device 6 increases the number of the wheels 12 to be in contact with the route surface when the weight of the loads loaded on the travel cart body 2 is equal to or more than the predetermined weight compared to when the weight of the loads loaded on the travel cart body 2 is less than the predetermined weight.

Thus, the cart robot 1 travels in a state in which more wheels 12 are in contact with the route surface when the weight of the load loaded on the travel cart body 2 is heavy. Therefore, the cart robot 1 can travel in a steady posture. Moreover, the cart robot 1 travels in a state in which less wheels 12 are in contact with the route surface when the weight of the load loaded on the travel cart body 2 is light. Therefore, the cart robot 1 can reduce a turning radius, and can make a sharp turn.

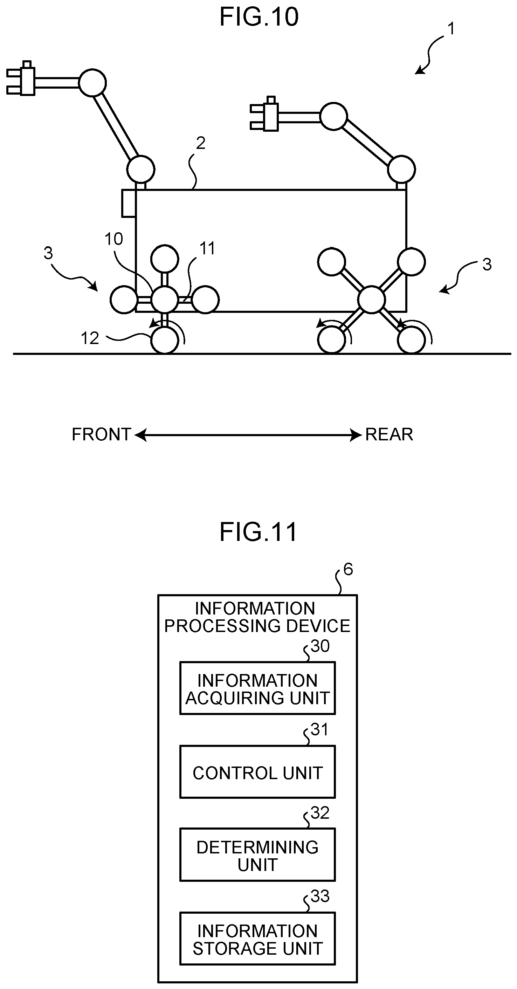

The control unit 31 of the information processing device 6 may control the respective drive mechanisms 3 such that the number of the wheels 12 to be in contact with the route surface in the drive mechanisms arranged on the front and rear directions of the travel cart body 2 differs. For example, the control unit 31 controls the number of the wheels 12 to be in contact with the route surface in the respective drive mechanisms 3 on the front side to be one, and the number of the wheels 12 to be in contact with the route surface in the respective drive mechanisms 3 on the rear side to be two as illustrated in FIG. 10. FIG. 10 is a diagram illustrating a state in which the cart robot 1 according to a modification travels on the flat travel route R1.

In this case, the control unit 31 controls the respective drive mechanisms 3 such that the travel cart body 2 is in a horizontal position. Specifically, the control unit 31 controls the third driving unit 15 to extend and retract the second axle 11, thereby maintaining the travel cart body 2 in a horizontal position. It may be configured to extend and retract only the second axle 11 to which the wheel 12 in contact with the route surface is attached.

Thus, the cart robot 1 can maintain the travel cart body 2 in a horizontal position while changing the number of the wheels 12 to be in contact with the route surface in the drive mechanism 3 according to the weight of the load loaded on the travel cart body 2. Therefore, the cart robot 1 can suppress movement of the load inside the travel cart body 2.

The control unit 31 may perform measurement of the weight of the load at a predetermined timing as described above. Thus, the control unit 31 can prevent repeated extension and retraction of the second axle 11 when the weight of the load fluctuates around the predetermined weight. For example, even when the weight of the load changes across the predetermined weight, the second axle 11 is extended and retracted according to the predetermined measurement timing at which the measurement of the weight of the load is performed. Thus, the control unit 31 can suppress the occurrence of hunting, in which the extension and retraction of the wheel 12 is repeated within a short period of time.

Moreover, more than one predetermined weight may be set. For example, the predetermined weight includes a first predetermined weight and a second predetermined weight. The second predetermined weight is a heavier weight than the first predetermined weight. The control unit 31 changes the number of the wheels 12 to be in contact with the route surface gradually according to the weight of the load loaded on the travel cart body 2.

For example, when the weight of the load loaded on the travel cart body 2 is less than the first predetermined weight, the control unit 31 controls the respective mechanisms 3 such that the number of the wheels 12 to be in contact with the route surface is one in the respective drive mechanisms 3.

When the weight of the load loaded on the travel cart body 2 is equal to or more than the first predetermined weight and less than the second predetermined weight, the control unit 31 controls the respective drive mechanisms 3 such that the number of the wheel 12 to be in contact with the route surface is one in the respective drive mechanisms on the front side. Moreover, when the weight of the load loaded on the travel cart body 2 is equal to or more than the first predetermined weight and less than the second predetermined weight, the control unit 31 controls the respective drive mechanisms 3 such that the number of the wheel 12 to be in contact with the route surface is two in the respective drive mechanisms on the rear side. The control unit 31 may control the number of the wheel 12 to be two in the respective drive mechanisms 3 on the front side, and the number of the wheel 12 to be in contact with the route surface to be one in the respective drive mechanism 3 on the rear side.

When the weight of the load loaded on the travel cart body 2 is equal to or more than the second predetermined weight, the control unit 31 controls the respective drive mechanisms 3 such that the number of the wheel 12 to be in contact with the route surface is two in the respective drive mechanisms 3.

### Third Embodiment

The cart robot 1 according to a third embodiment will be explained. Explanation of the same component as the first embodiment will be omitted.

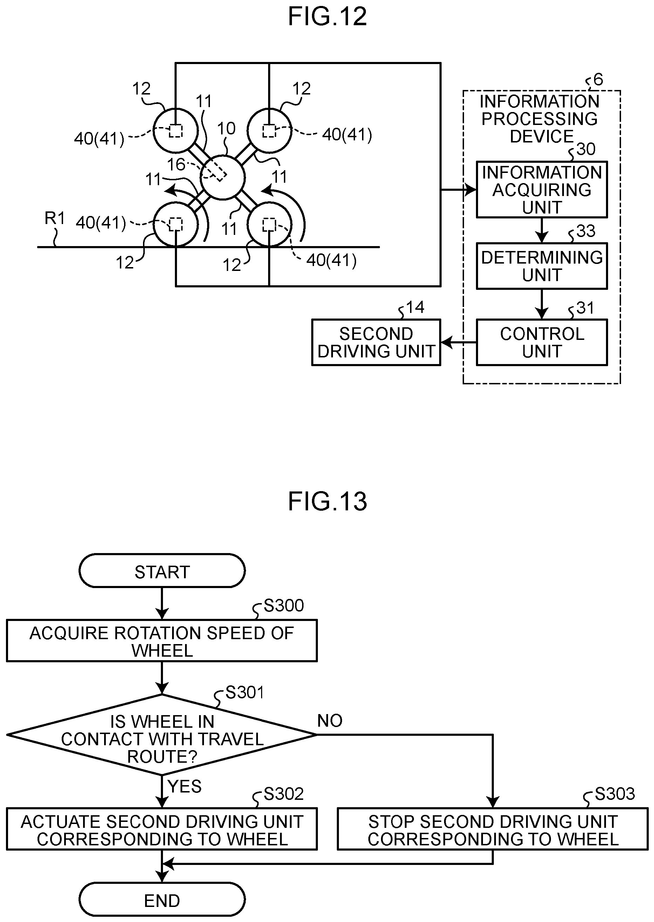

The cart robot 1 further includes a detecting unit 40 (refer to FIG. 12).

The detecting unit 40 constitutes a drive stopping unit of the wheel 12. The detecting unit 40 is a rotation speed sensor 41 (refer to FIG. 12) in the third embodiment. The rotation speed sensor 41 detects the rotation speed of the wheels 12 provided on multiple second axles 11. A configuration of the drive stopping unit of the wheel 12 including the detecting unit 40 (the rotation speed sensor 41) will be described later using FIG. 12.

The information processing device 6 includes the information acquiring unit 30, the control unit 31, a determining unit 33, and the information storage unit 32 as illustrated in FIG. 11. FIG. 11 is a control block diagram of the information processing device 6 according to the third embodiment.

The information acquiring unit 30 acquires the rotation speed of the wheel 12 detected by the rotation speed sensor 41.

The determining unit 33 determines whether the wheel 12 is in contact with the travel route R1 based on a detection result of the rotation speed sensor 41 acquired by the information acquiring unit 30 when the travel route R on which the cart robot 1 travels is the flat travel route R1. The determining unit 33 determines whether each of the wheels 12 is in contact with the travel route R1, or not in contact with the travel route R1 based on a difference in the rotation speed detected by the rotation speed sensor 41 for each of the wheels 12.

The control unit 31 detects the wheel 12 that is not in contact with the travel route R1 based on a determination result of the determining unit 33. The control unit 31 stops, when the wheel 12 not in contact with the travel route R1 is detected, the second driving unit 14 that applies a driving force to the detected wheel 12. A drive stopping control of the wheel 12 by the control unit 31 will be described later using FIG. 13.

Next, a drive stopping configuration and a drive stopping control of the wheel 12 not in contact with the travel route R1 in the cart robot 1 according to the third embodiment will be explained referring to FIGs. 12 and 13. FIG. 12 is a diagram illustrating the drive stopping configuration of the wheel 12 not in contact with the travel route R1 in the cart robot 1 according to the third embodiment. FIG. 13 is a flowchart explaining processing of the drive stopping control of the wheel 12 not in contact with the travel route R1 in the cart robot 1 according to the third embodiment.

As illustrated in FIG. 12, the rotation speed sensor 41, which is the detecting unit 40 constituting the drive stopping unit of the wheel 12 is arranged in each of the wheels 12. The rotation speed sensor 41 detects the rotation speed of each of the wheels 12. For the rotation speed sensor 41, a mechanical type, an optical type, a magnetic type, and the like can be used.

In the information processing device 6, when rotation of the second axle 11 is restricted by the first lock unit 16, that is, when the cart robot 1 (refer to FIG. 1) travels on the flat travel route R1, the information acquiring unit 30 acquires the rotation speed of the wheel 12 detected by the rotation speed sensor 41. In the information processing device 6, the determining unit 33 determines whether the wheel 12 is in contact with the travel route R1 based on the rotation speed detected by the rotation speed sensor 41 for each of the wheels 12.

In the information processing device 6, the control unit 31 detects the wheel 12 that is not in contact with the travel route R1 based on the determination result of the determining unit 33. The control unit 31 stops rotation drive of the wheel 12 by the second driving unit 14 corresponding to the detected wheel 12.

As illustrated in FIG. 13, in the drive stopping control, the information processing device 6 acquires the rotation speed of each of the wheels 12 detected by the rotation speed sensor 41 by the information acquiring unit 30 (step S300). Subsequently, the information processing device 6 determines whether the wheel 12 is in contact with the travel route R1 by the determining unit 33 for each of the wheels 12 (step S301)

In the processing at step S301, when it is determined that the wheel 12 is in contact with the travel route R1 (step S301: YES), the control unit 31 actuates the second driving unit 14 corresponding to the wheel 12 in contact with the travel route R1 (step S302). In this case, because the control unit 31 actuates the second driving unit 14, the second driving unit 14 drives to rotate the corresponding wheel 12.

On the other hand, in the processing at step S301, when it is determined that the wheel 12 is not in contact with the travel route R1 (step S301: NO), the control unit 31 stops the second driving unit 14 corresponding to the wheel 12 not in contact with the travel route R1 (step S303). In this case, because the control unit 31 stops the second driving unit 14, the rotational drive of the corresponding wheel 12 by the second driving unit 14 is stopped.

As described, in the cart robot 1 according to the third embodiment, when the rotation of the second axle 11 in the circumference direction of the first axle 10 is restricted by the first lock unit 16, the information processing device 6 detects the wheel 12 not in contact with the travel route R1 on which the travel cart body 2 (the cart robot 1) travels, and stops rotational drive by the second driving unit 14 corresponding to the detected wheel 12.

Thus, when the travel cart body 2 (the cart robot 1) travels on the flat travel route R1, it is possible to prevent a person or an object from being caught in the wheel 12 that is not in contact with the travel route R1, thereby improving safety. Moreover, it is possible to reduce waste of applying a driving force to the unused wheel 12, thereby achieving energy saving. Moreover, because unnecessary operation of the second driving unit 14 is suppressed, deterioration of the second driving unit 14 can be suppressed.

Furthermore, the cart robot 1 according to the third embodiment includes the detecting unit 40 (the rotation speed sensor 41) that detects the rotation speed of each of the wheels 12 arranged in the multiple second axles 11, and the determining unit 33 that determines whether the wheel 12 is in contact with the travel route R1 based on a difference in the rotation speed detected by the detecting unit 40 (the rotation speed sensor 41). The information processing device 6 detects the wheel 12 that is not in contact with the travel route R1 based on a determination result of the determining unit 33.

Thus, detection of the wheel that is not in contact with the travel route R1 is enabled based on a difference in the rotation speed of each of the wheels 12.

### Fourth Embodiment

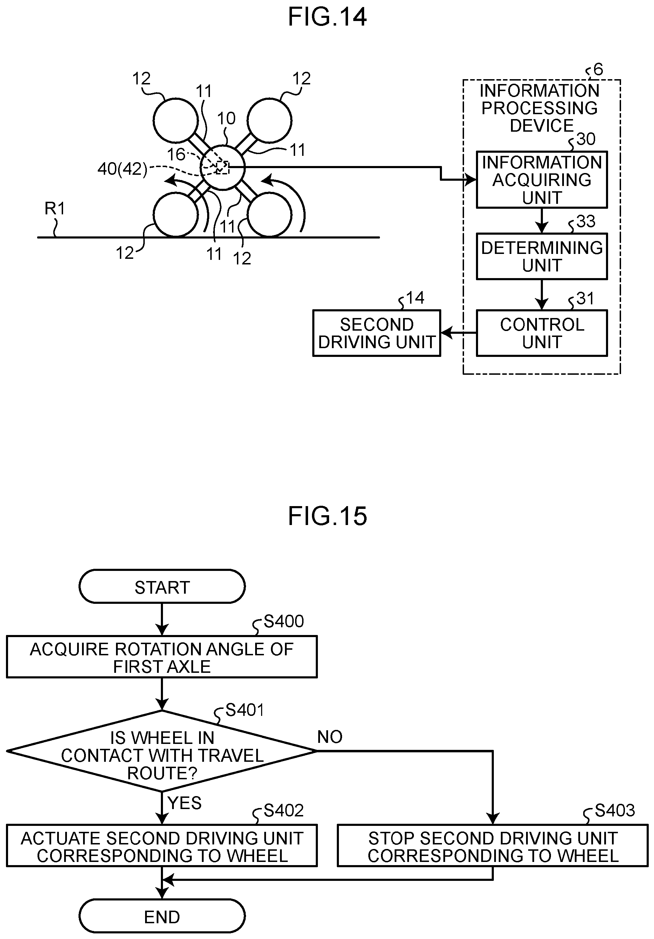

Next, the cart robot 1 according to a fourth embodiment will be explained referring to FIGs. 14 and 15. FIG. 14 is a diagram illustrating a drive stopping configuration of the wheel 12 that is not in contact with the travel route R1 in the cart robot 1 according to the fourth embodiment. FIG. 15 is a flowchart explaining processing of a drive stopping control of the wheel 12 that is not in contact with the travel route R1 in the cart robot 1 according to the fourth embodiment.

The fourth embodiment explained in the following differs from the third embodiment in the drive stopping configuration and the drive stopping control of the wheel 12. Therefore, in the following explanation, identical reference symbols are assigned to identical or equivalent portions to those in the third embodiment, and explanation of the identical or equivalent portions to those in the third embodiment may be omitted.

As illustrated in FIG. 14, the detecting unit 40 constitutes the drive stopping unit of the wheel 12. The detecting unit 40 is a rotation angle sensor 42 in the fourth embodiment. The rotation angle sensor 42 detects the rotation angle of the first axle 10 when the rotation of the second axle 11 is restricted. That is, the rotation angle sensor 42 detects the rotation angle of the first axle 10 in a restricted state by the first lock unit 16 when the cart robot 1 (refer to FIG. 1) travels on the flat route R1.

As illustrated in FIG. 14, the rotation angle sensor 42, which is the detecting unit 40 constituting the drive stopping unit of the wheel 12 is arranged on the first axle 10. The rotation angle sensor 42 detects the rotation angle of the first axle 10 in a restricted state by the first lock unit 16. For the rotation angle sensor 42, a potentiometer can be used.

In the information processing device 6, when the rotation of the second axle 11 is restricted by the first lock unit 16, that is, when the cart robot 1 (refer to FIG. 1) travels on the flat route R1, the information processing device 6 acquires the rotation angle of the first axle 10 detected by the rotation angle sensor 42 by the information acquiring unit 30. In the information processing device 6, the determining unit 33 determines whether the wheel 12 is in contact with the travel route R1 based on the rotation angle of the first axle 10.

In the information processing device 6, the control unit 31 detects the wheel 12 that is not in contact with the travel route R1 based on the determination result of the determining unit 33. The control unit 31 stops rotational drive of the wheel 12 by the second driving unit 14 corresponding to the detected wheel 12.

As illustrated in FIG. 15, in the drive stopping control, the information processing device 6 acquires the rotation angle of the first axle 10 by the rotation angle sensor 42 by the information acquiring unit 30 (step S400). Subsequently, the information processing device 6 determines whether the wheel 12 is in contact with the travel route R1 by the determining unit 33 for each of the wheels 12 (step S401).

In the processing at step S401, when it is determined that the wheel 12 is in contact with the travel route R1 (step S401: YES), the control unit 31 actuates the second driving unit 14 corresponding to the wheel 12 in contact with this travel route R1 (step S402). In this case, because the control unit 31 actuates the second driving unit 14, the second driving unit 14 drives to rotate the corresponding wheel 12.

On the other hand, in the processing at step S401, when it is determined that the wheel 12 is not in contact with the travel route R1 (step S401: NO), the control unit 31 stops the second driving unit 14 corresponding to the wheel 12 not in contact with the travel route R1 (step S403). In this case, because the control unit 31 stops the second driving unit 14, the rotational drive of the corresponding wheel 12 by the second driving unit 14 is stopped.

As described, in the cart robot 1 according to the fourth embodiment, the information processing device 6 detects the wheel 12 that is not in contact with the travel route R1 on which the travel cart body 2 (the cart robot 1) travels when the rotation in the circumference direction of the first axle 10 of the second axle 11 is restricted by the first lock unit 16, and stops rotational drive by the second driving unit 14 corresponding to the detected wheel 12.

Thus, when the travel cart body 2 (the cart robot 1) travels on the flat travel route R1, it is possible to prevent a person or an object from being caught in the wheel 12 that is not in contact with the travel route R1, thereby improving safety. Moreover, it is possible to reduce waste of applying a driving force to the unused wheel 12, thereby achieving energy saving. Moreover, because unnecessary operation of the second driving unit 14 is suppressed, deterioration of the second driving unit 14 can be suppressed.

Furthermore, the cart robot 1 according to the fourth embodiment includes the detecting unit 40 (the rotation angle sensor 42) that detects the rotation angle of the first axle 10 when the rotation of the second axle 11 in the circumference direction of the first axle 10 is restricted, and the determining unit 33 that determines whether the wheel 12 is in contact with the travel route R1 based on the rotation angle detected by the detecting unit 40 (the rotation angle sensor 42). The information processing device 6 detects the wheel 12 that is not in contact with the travel route R1 based on a determination result of the determining unit 33.

Thus, detection of the wheel that is not in contact with the travel route R1 is enabled based on a rotation angle of the first axle 10 subjected to rotation restriction as a result of restriction of rotation of the second axle 11 in the circumference direction of the first axle 10. That is, because the wheels 12 are aligned in a predetermined arrangement on an outer circumference portion of the first axle 10, by detecting the rotation angle of the first axle 10, the wheel that is not in contact with the travel route R1 can be detected.

Although the rotation speed sensor 41 that detects the rotation speed of each of the wheels 12 or the rotation angle sensor 42 that detects the rotation angle of the first axle 10 is used as the detecting unit 40 to detect the wheel 12 not in contact with the travel route R1 in the embodiments described above, other sensors can be used.

As the detecting unit 40, for example, a pressure sensor that detects pressure applied to the second axle 11 or the wheel 12 can be used. When a pressure sensor is used, the wheel 12 to which a pressure equal to or higher than a predetermined value is applied is detected as the wheel 12 in contact with the travel route R1, and detects the wheel 12 to which a pressure lower than the predetermined value is applied as the wheel 12 not in contact with the travel route R1.

The present invention has been explained using the embodiments, but the technical scope of the present invention is not limited to the range described in the above embodiments. It is obvious to those skilled in the art that various modifications or improvements can be made to the embodiments described above. It is evident from the description of the claims that forms with such modifications or improvements are also included in the technical scope of the present invention.

As for the execution sequence of respective processes such as operations, procedures, steps, and stages, in the device, the system, the program, and the method described in the claims, the specification, and the drawings, "preceding", "prior to", and the like are not specifically stated, and unless an output of a preceding process is used in a subsequent process, it is noted that the processes can be implemented in any order. Even if the operational flow in the claims, specification, and drawings is explained using terms such as "first" and "next" for convenience, this does not mean that the operations are essential to be performed in this order.

### Reference Signs List

- 1: CART ROBOT
- 2: TRAVEL CART BODY
- 3: DRIVE MECHANISM
- 4: ARM
- 5: DETECTING UNIT
- 6: INFORMATION PROCESSING DEVICE (CONTROL DEVICE)
- 10: FIRST AXLE
- 11: SECOND AXLE
- 12: WHEEL
- 13: FIRST DRIVING UNIT
- 14: SECOND DRIVING UNIT
- 15: THIRD DRIVING UNIT
- 16: FIRST LOCK UNIT
- 17: SECOND LOCK UNIT
- 20: FIRST DETECTING UNIT
- 21: SECOND DETECTING UNIT
- 30: INFORMATION ACQUIRING UNIT
- 31: CONTROL UNIT
- 32: INFORMATION STORAGE UNIT
- 33: DETERMINING UNIT
- 40: DETECTING UNIT
- 41: ROTATION SPEED SENSOR
- 42: ROTATION ANGLE SENSOR

## Claims

1. A cart robot comprising:
a travel cart body;
a first axle that is arranged on the travel cart body;
a plurality of second axles that extend in a diameter direction of the first axle from a distal end portion of the first axle, and that can extend and retract in the diameter direction;
a wheel that is arranged at a distal end portion of the respective second axles;
a first driving unit that rotates the second axles in a circumference direction of the first axle;
a second driving unit that rotates the wheel with respect to the second axle;
a third driving unit that extends and retracts the second axle in the diameter direction;
a first lock unit that can restrict rotation of the second axle in the circumference direction;
a second lock unit that can restrict rotation of the wheel; and
a control device that controls extension and retraction of the second axle, restriction by the first lock unit, and restriction by the second lock unit.

2. The cart robot according to claim 1, wherein
a part of the travel cart body is slidable in a traveling direction of the travel cart body.

3. The cart robot according to claim 1, further comprising
a first detecting unit that detects a shape of a travel route in a traveling direction of the travel cart body, wherein
the control device controls the extension and retraction of the second axle, the restriction by the first lock unit, and the restriction by the second lock unit according to the shape of the travel route detected by the first detecting unit.

4. The cart robot according to any one of claims 1 to 3, further comprising:
an arm that is attached to the travel cart body; and
a second detecting unit that detects movement of the arm on a distal end side, wherein
the control device controls the arm based on a detection result by the second detecting unit.

5. The cart robot according to claim 1, wherein
when rotation of the second axle in the circumference direction is restricted by the first lock unit, the control unit detects the wheel that is not in contact with a route surface on which the travel cart body travels, and stops rotational drive by the second driving unit corresponding to the detected wheel.

6. The cart robot according to claim 5, further comprising:
a detecting unit that detects a rotation speed of each of the wheels arranged at each of the second axles; and
a determining unit that determines whether the wheel is in contact with the route surface based on a difference in the rotation speed detected by the detecting unit,
wherein
the control device detects the wheel not in contact with the route surface based on a determination result of the determining unit.

7. The cart robot according to claim 5, further comprising:
a detecting unit that detects a rotation angle of the first axle when rotation of the second axle in the circumference direction is restricted; and
a determining unit that determines whether the wheel is in contact with the route surface based on the rotation angle detected by the detecting unit, wherein
the control device detects the wheel not in contact with the route surface based on a determination result of the determining unit.

8. A cart robot comprising:
a travel cart body;
a first axle that is arranged on the travel cart body;
a plurality of second axles that extend in a diameter direction of the first axle from a distal end portion of the first axle;
a wheel that is arranged at a distal end portion of the respective second axles;
a first driving unit that rotates the second axles in a circumference direction of the first axle;
a second driving unit that rotates the wheel with respect to the second axle; and
a control device that controls the first driving unit and the second driving unit, wherein
the control device changes number of the wheels to be in contact with a route surface according to weight of a load loaded on the travel cart body.

9. The cart robot according to claim 8, wherein
the control device increases, when the weight of the load loaded on the travel cart body is equal to or more than a predetermined weight, the number of wheels to be in contact with the route surface compared to when the weight of the load loaded on the travel cart body is less than the predetermined weight.

10. The cart robot according to claim 8 or 9, further comprising
a third driving unit that extends and retracts the second axle in the diameter direction, wherein
the first axle is provided in plurality,
the second axles are extendable in the diameter direction, and
the control device controls a length of each of the second axles arranged at the first axle such that the travel cart body is in a horizontal position.
